# EUROPÄISCHE PATENTSCHRIFT

(11) **EP 0 311 763 B1**
(45) Veröffentlichungstag und Bekanntmachung des Hinweises auf die Patenterteilung: **06.10.1993**
(21) Anmeldenummer: 88112515.7
(22) Anmeldetag: 02.08.1988
(51) Int. Cl.: B01D 21/00

(54) **Sedimentationsbehälter für die Wasser- und Abwasserreinigung**
Sedimentation tank for water and waste water purification
Réservoir de sédimentation pour la purification d'eau et d'eau d'égout

(30) Priorität: 12.10.1987 DE 8713661 U
(43) Veröffentlichungstag der Anmeldung: 19.04.1989
(73) Patentinhaber: PASSAVANT-WERKE AG, D-65322 Aarbergen 7 (DE)
(72) Erfinder: Becker, Heinrich, D-6209 Aarbergen 2 (DE)

(56) Entgegenhaltungen:
- DE-A- 2 558 872
- GB-A- 496 236
- GB-A- 2 119 668
- US-A- 1 526 197
- KORRESPONDENZ ABWASSER, 31. Jahrgang, Februar 1984, Seiten 104-111; H. SCHADE et al.: "Parallelplattenabscheider (Tilted Plate Settler)"

## Beschreibung

Die Neuerung betrifft einen Sedimentationsbehälter für die Wasser- und Abwasserreinigung.

Aufgabe solcher Behälter ist es, die spezifisch schwereren Wasser- und Abwasserinhaltsstoffe durch Absetzen abzutrennen. Dabei können bei der Abtrennung neben der Schwerkraft auch Strömungskräfte, z.B. Zentrifugalkräfte, und Agglomeration, d.h. Zusammenballungen zu besser sedimentierbaren Partikelgrößen, nützlich sein.

In letzter Zeit haben sich Sedimentationsbehälter als wirkungsvoll erwiesen, die im Verhältnis zu ihrem Durchmesser eine große Höhe haben (GB-A-2 119 668). Diese Sedimentationsbehälter, die über die überwiegende Höhe einen kreiszylindrischen Querschnitt und einen oberen, tangential einmündenden Zulauf haben, sind durch ein konzentrisches Leitrohr in zwei Sedimentationszonen unterteilt, und zwar in eine äußere, von oben nach unten und eine innere von unten nach oben durchströmte Zone. Durch die Umlenkung des feststoffbeladenen Wassers an der Unterkante des Leitrohrs tritt eine weiter Abtrennung durch Trägheitskräfte und Strömungsberuhigung ein. Der untere Konusboden, auf den die abgetrennten Feststoffe sinken, ist mit einem umlaufenden Räumwerk und einem zentralen Schlammabzug versehen.

Bei diesen Sedimentationsbehältern bestand der Wunsch, den Abscheidegrad zu verbessern. Es wurde dazu vorgeschlagen, auf Schrägplattenabscheider zurückzugreifen (Korrespondenz Abwasser, Heft 2, 1984, S.106), die für ihren hohen Abscheidegrad bekannt sind.

Bei dem aus der DE-A-27 47 322 bekannten Hochbehälter der eingangs geschilderten Art liegen diese Schrägplattenabscheider in dem Ringraum der das aufwärts durchströmte Leitrohr umgibt. Die Schrägplattenabscheider werden durch in dem Leitrohr vorgesehene Durchflußöffnungen im Kreuzstrom beaufschlagt. Die Sedimente der Schrägplattenabscheider sinken in dem strömungslosen Ringraum zum Konusboden.

Mit dieser mit Nachreinigungsstufe ausgerüsteten Konstruktion werden bereits sehr gute Abscheideergebnisse erzielt. Es ist jedoch in vielen Anwendungsbereichen wünschenswert, den Abscheidegrad noch weiter zu verbessern und insbesondere die eingangs erwähnten zusätzlichen Abtrenneffekte einzusetzen sowie die Schrägplattenabscheidestufe noch zu vervollkommnen. Die Lösung dieser Aufgabe besteht darin, daß das Leitrohr (16) oben so erweitert ist, daß es mit seiner Oberkante oberhalb des Zulaufs dichtend an der Innenwand des Sedimentationsbehälters angesetzt ist, daß oberhalb des Leitrohrs ein im Gegenstrom zur Austragrichtung des Sediments aufwärts durchströmter Schrägplattenabscheider mit ebenflächigen Platten vorgesehen ist, daß die untere Anströmfläche des Schrägplattenabscheiders den gesamten Strömungsquerschnitt des Leitrohrs erfaßt, und daß die Überlaufrinne in dem von den Schrägplatten freigelassenen oberen Zwickelraum angeordnet ist.

Das Leitrohr ist üblicherweise ein Konus mit gleichbleibendem Konuswinkel. Das Leitrohr kann aber auch aus mehreren Abschnitten mit verschiedenen Konuswinkeln zusammengesetzt sein. Der mittlere Abschnitt ist dann zylindrisch. Bei richtiger Bemessung des untersten Abschnitts des Leitrohrs bildet sich dort ein Schwebebett von Feststoffpartikeln, die die zum Absinken erforderliche Größe noch nicht erreicht haben. Durch Agglomeration mit neu hinzukommenden Partikeln wird schließlich eine Größe erreicht, die das Ausfallen aus dem Schwebebett ermöglicht. Wegen der Verlegung der Schrägplattenabscheider in den Raum über dem Leitrohr kann die Fläche der Schrägplattenabscheider jetzt so vergrößert werden, daß dort der Abscheidegrad nochmals verbessert wird.

Der obere, die Schrägplattenabscheider aufnehmende Behälterabschnitt kann im Querschnitt rechteckig und insbesondere quadratisch sein. Die Schrägplattenabscheider können dann raumfüllend den ganzen Querschnitt abdecken. In dem sich oben ergebenden Zwickelraum ist die Überlaufrinne für das Klarwasser untergebracht, deren höhenverstellbare Wehrkante den über der Oberseite der Schrägplattenabscheider liegenden Wasserstand im Behälter bestimmt.

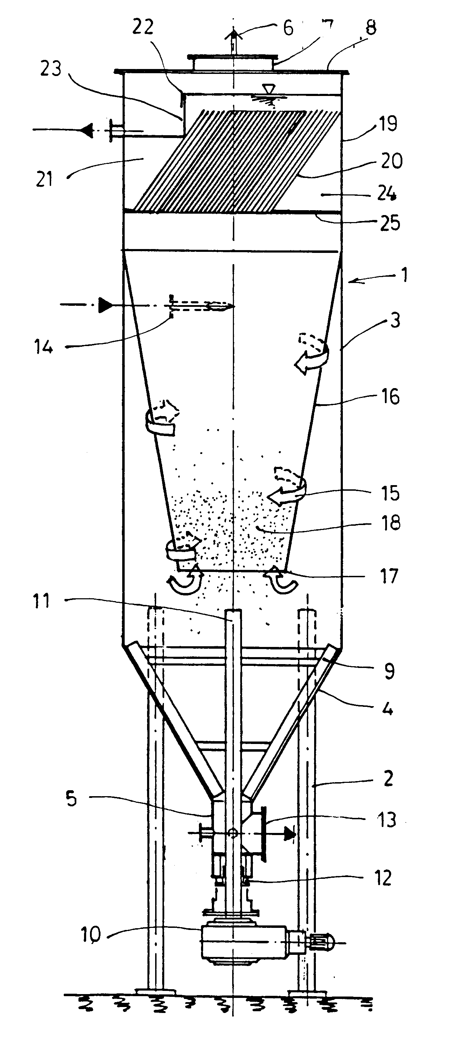

In der Abbildung ist ein erfindungsgemäß ausgebildeter Sedimentationsbehälter 1 im vertikalen Achsschnitt dargestellt. Der auf Füßen 2 abgestützte Behälter besteht aus einem kreiszylindrischen Mittelteil 3, einem Konusboden 4 mit zentralem Schlammaustrag 5 und einer oberen mit einer Entlüftung 6 und einer Kontrollöffnung 7 versehenen Abdeckung 8. Der Konusboden nimmt ein Räumwerk 9 auf, das von einem unter dem Schlammaustrag montierten Getriebemotor 10 angetrieben wird. Die Welle 11 ist mittels einer Stopfbuchse 12 abgedichtet. Über der Stopfbuchse 12 liegt der seitliche Schlammaustrag 13.

Der Zulaufstutzen 14 ist tangential im oberen Behälterdrittel angeschlossen. Die rotierende und langsam abwärts wandernde Strömung 15 wird innen von einem konischen Leitrohr 16 begrenzt und beruhigt, das mit Abstand über dem Konusboden 4 endet. An seiner Unterkante 17 wird die Strömung um 180° umgelenkt und steigt dann innerhalb des Leitrohrs 16 unter weiterer Beruhigung aufwärts. Im unteren Abschnitt des Leitrohres 16 bildet sich ein Schwebebett 18, das ständig von neu eingetragenen Partikeln gespeist wird und aus dem ständig größere Feststoffagglomerate nach unten ausfallen.

Den obersten im Querschnitt quadratischen Behälterabschnitt 19 nehmen die Schrägplattenpakete 20 ein, die nach einer Seite ausgerichtet sind. In dem oben neben den Schrägplattenabscheidern gebildeten Zwickelraum 21 ist die mit einer höhenverstellbaren Wehrkante 22 ausgerüstete Klarwasserüberlaufrinne 23 untergebracht. Der auf der anderen Seite unten verbleibende Zwickelraum 24 ist gegen die Anströmseite abgedeckt (25).

Der Schutz ist nicht auf die dargestellte Ausführungsform beschränkt. So kann z.B. das Leitrohr eine andere Form bekommen, die die Strömungsgeschwindigkeiten innerhalb und außerhalb anders einstellt. Führt man den obersten Abschnitt des Behälters ebenfalls kreisrund aus, dann können die Schrägplattenpakete sternförmig innerhalb einer äußeren Ringrinne angeordnet sein. Es ergibt sich dann lediglich innen ein unausgenutzter Zwickelraum. Der Antrieb des Räumwerks kann auch von oben erfolgen. Die Abdichtung der Räumwerkswelle könnte dann entfallen.

## Patentansprüche

1. Sedimentationsbehälter für die Wasser- und Abwasserreinigung in mindestens größtenteils stehend kreiszylindrischer Form, mit einem unteren Konusboden (4), über den ein angetriebenes Räumwerk (9) läuft, einem im oberen Bereich in die Wand des Sedimentationsbehälters tangential einmündenden Zulauf (14), einem inneren mit Abstand über dem Räumwerk angeordneten konzentrischen Leitrohr (16) mit nach unten abnehmendem Durchmesser, das zuerst außen absteigend rotierend umströmt und dann innen aufsteigend durchströmt wird, und mit einem über der Oberkante des Leitrohres liegenden Reinwasserablauf, der die Form einer mit Überlaufkante (22) ausgestatteten Überlaufrinne (23) hat, **dadurch gekennzeichnet,** daß das Leitrohr (16) oben so erweitert ist, daß es mit seiner Oberkante oberhalb des Zulaufs (14) dichtend an der Innenwand des Sedimentationsbehälters angesetzt ist, daß oberhalb des Leitrohrs (16) ein im Gegenstrom zur Austragsrichtung des Sediments aufwärts durchströmter Schrägplattenabscheider (20) mit ebenflächigen Platten vorgesehen ist, daß die untere Anströmfläche des Schrägplattenabscheiders (20) den gesamten Strömungsquerschnitt des Leitrohres (16) erfaßt, und daß die Überlaufrinne (23) in dem von den Schrägplatten (20) freigelassenen oberen Zwickelraum (21) angeordnet ist.

2. Sedimentationsbehälter nach Anspruch 1, **dadurch gekennzeichnet,** daß das Leitrohr (16) aus einem oberen Abschnitt mit größerem Konuswinkel und einem unteren Abschnitt mit kleinerem Konuswinkel besteht.

3. Sedimentationsbehälter nach Anspruch 2, **dadurch gekennzeichnet,** daß zwischen den beiden unterschiedlichen konischen Abschnitten ein mittlerer zylindrischer Abschnitt vorgesehen ist.

4. Sedimentationsbehälter nach Anspruch 1 bis 3, **dadurch gekennzeichnet,** daß der den Schrägplattenabscheider (20) aufnehmende obere Abschnitt (19) des Behälters (1) einen rechteckigen, insbesondere quadratischen Querschnitt hat und daß der Übergang zu dem unteren kreiszylindrischen Abschnitt (3) zwischen der Unterkante des Schrägplattenabscheiders (20) und dem Anschluß des Leitrohrs (16) liegt.

5. Sedimentationsbehälter nach einem oder mehreren der vorstehenden Ansprüche, **dadurch gekennzeichnet,** daß der Querschnitt des oberen Abschnitts von mehreren Schrägplattenabscheidern (20) vollständig ausgefüllt ist und daß ihre unteren Zuströmseiten vollständig gegen die Behälterwand (1) abgedichtet sind.

6. Sedimentationsbehälter nach einem oder mehreren der vorstehenden Ansprüche, **dadurch gekennzeichnet,** daß das auf dem konischen Schrägboden (4) umlaufende Räumwerk (9) von unten angetrieben wird.

## Claims

1. Sedimentation tank for water and waste water treatment with, at least for the greater part, upright circular cylindrical shape, provided with a cone-type bottom (4) on which circulates a motor-driven scraper unit (9), with a tangential inlet ending in the upper range of the sedimentation, tank wall, an internal concentric guide tube (16) with tapered lower diameter where the water first flows downward around the outside in a rotational motion and then upward through the inside, and with a clear water discharge (23) positioned above the upper edge of the guide tube, **characterized in that** the guide tube (16) is enlarged at its upper part in a way to seal with its upper edge against the sedimentation tank (1) inside wall and that a lamella-plate separator (20) equipped with inclined plane lamella-plates with an upward flow which is contrary to the discharge direction of the settlements is provided above the guide tube (16), that the lower flow reception area of the inclined lamella-plate separator (20) covers the entire cross section of the guide tube (16) and that the overflow trough (23) is positioned in the area left open by the inclined lamella-plates (20).

2. Sedimentation tank according to claim 1, **characterized in that** the guide tube (16) consists of an upper section with a larger cone angle and a lower section with a smaller cone angle.

3. Sedimentation link according to claim 2, **characterized in that** an intermediate cylindrical section is provided between the two different concical sections.

4. Sedimentation tank according to claim 1 to 3, **characterized in that** the upper section (19) of the tank (1) where the inclined lamella-plate separator (20) is positioned, has a rectangular, particularly square, section and that the transition to the lower circular cylindrical section (3) is located between the lower edge of the inclined lamella-plate separator (20) and the connection of the guide tube (16).

5. Sedimentation tank according to one or several of before-mentioned claims, **characterized in that** the profile of the upper section is completely filled with several inclined lamella-plate separators (20) and that their lower influent sides are completely sealed against the tank wall (1).

6. Sedimentation tank according to one or several of before-mentioned claims, **characterized in that** the scraper unit (9) circulating on the cone-type bottom (4) is driven from below.

## Revendications

1. Réservoir de sédimentations pour l'épuration des eaux et des eaux d'égout d'une forme cylindrique circulaire, au moins en grande partie debout, avec un fond de cône inférieur (4) sur lequel agit un système à racleurs entraîné (9), avec une entrée aboutissant de façon tangentielle, dans la partie supérieure, dans la paroi du réservoir de sédimentations, avec un tube de guidage concentrique intérieur (16) avec un diamètre se réduisant vers le bas, contourné tout d'abord vers le bas à l'extérieur, puis qui est traversé vers le haut à l'intérieur, et avec un écoulement d'eaux pures (23) se trouvant au-dessus du bord supérieur du tube de guidage, qui a la forme d'un canal de débordage (23) équipé d'un bord-déversoir (22), **caractérisé par le fait** que le tube de guidage (16) est élargi en haut de telle sorte qu'il s'appuie avec son bord supérieur de façon étanche contre la paroi intérieure du réservoir de sédimentations (1), qu'au-dessus du tube de guidage (16) un séparateur à plaques obliques (20) traversé vers le haut à contre-courant du sens d'évacuation du sédiment est équipé de plaques à surface plane, que la surface inférieure d'afflux du séparateur à plaques obliques (20) saisit la totalité de la section de courant du tube de guidage (16), et que le canal de débordage (23) est agencé dans l'espace à gousset (21) supérieur laissé libre par les plaques obliques (20).

2. Réservoir de sédimentations selon la revendication 1, **caractérisé par le fait** que le tube de guidage (16) est composé d'une section supérieure avec un angle d'entrée plus grand et d'une section inférieure avec un angle d'entrée plus petit.

3. Réservoir de sédimentations selon la revendication 2, **caractérisé par le fait** qu'entre les deux sections coniques différentes, il est prévu une section moyenne cylindrique.

4. Réservoir de sédimentations selon les revendications 1 à 3, **caractérisé par le fait** que la section supérieure (19) du réservoir (1) dans laquelle se trouve le séparateur à plaques obliques (20) présente une section rectangulaire, notamment carrée, et que le passage vers la section (3) inférieure cylindrique circulaire se trouve entre le bord inférieur du séparateur à plaques obliques (20) et le raccordement du tube de guidage (16).

5. Réservoir de sédimentations selon une ou plusieurs des revendications susmentionnées, **caractérisé par le fait** que la section de la partie supérieure est entièrement remplie par plusieurs séparateurs à plaques obliques (20) et que leurs côtés d'afflux inférieurs sont entièrement étanchéifiés contre la paroi du réservoir (1).

6. Réservoir de sédimentations selon une ou plusieurs des revendications susmentionnées, **caractérisé par le fait** que le système à racloirs (9) tournant sur le fond incliné (4) conique est entraîné par le bas.
